(19) Europäisches Patentamt
European Patent Office
Office européen des brevets

(11) **EP 3 950 757 A1**

(12) **EUROPEAN PATENT APPLICATION**
published in accordance with Art. 153(4) EPC

(43) Date of publication:
**09.02.2022 Bulletin 2022/06**

(21) Application number: **20778832.4**

(22) Date of filing: **27.03.2020**

(51) International Patent Classification (IPC):
**C08G 18/38** (2006.01)     **G02B 1/04** (2006.01)
**G02C 7/00** (2006.01)

(52) Cooperative Patent Classification (CPC):
**C08G 18/38; G02B 1/04; G02C 7/00**

(86) International application number:
**PCT/JP2020/014088**

(87) International publication number:
**WO 2020/196847 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.03.2019 JP 2019063806**

(71) Applicant: **Hoya Lens Thailand Ltd.
Pathumthani 12130 (TH)**

(72) Inventors:
• **KOUSAKA, Masahisa
  Tokyo 160-8347 (JP)**
• **KAGEYAMA, Yukio
  Tokyo 160-8347 (JP)**
• **OHNISHI, Tomofumi
  Tokyo 160-8347 (JP)**
• **SANO, Yoshio
  Tokyo 160-8347 (JP)**

(74) Representative: **Gerauer, Marc Philippé
Kraus & Weisert
Patentanwälte PartGmbB
Thomas-Wimmer-Ring 15
80539 München (DE)**

(54) **RESIN COMPOSITION FOR OPTICAL MEMBERS, OPTICAL MEMBER AND EYEGLASS LENS**

(57) Provided is a polymerizable composition for optical components, which can prevent the occurrence of coloring while keeping the required strength for optical components when an optical component is produced using the polymerizable composition for optical components.

The polymerizable composition for optical components according to the present embodiment includes a polyisocyanate compound (A) and a polythiol compound (B1) and has an equivalent ratio (A/B1) of 80/100 to 95/100, wherein the equivalent ratio (A/B1) represents a ratio of an equivalent A of the polyisocyanate compound (A) calculated using the molecular weight and the functional group number of the polyisocyanate compound (A) to an equivalent B1 of the polythiol compound (B1) calculated using the molecular weight and the functional group number of the polythiol compound (B1).

**Description**

[Technical Field]

The present disclosure relates to a polymerizable composition for optical components, an optical component, and a spectacle lens.

[Background Art]

Plastic spectacle lenses are lightweight and excellent in impact durability as compared with glass spectacle lenses. For this reason, plastic spectacle lenses are mainstream in the current spectacle lens market.
It has been known that a plastic lens with a high refractive index can be obtained by the reaction of a polyisocyanate compound and a polythiol compound. For example, PTL 1 discloses a sulfur-containing urethane-based resin lens obtained by heating and curing a composition comprising a tetrathiol and at least one ester compound selected from the group consisting of a polyisocyanate compound, a polyisothiocyanate compound, and an isothiocyanate compound having an isocyanato group. This lens is colorless and transparent, has a high refractive index, low dispersion, and excellent heat resistance, and further shows excellent productivity.

[Citation List]

[Patent Literature]

[PTL1] Japanese Patent Application Publication No. H7-252207

[Summary of Invention]

[Technical Problem]

However, a spectacle lens obtained by a reaction between a polyisocyanate compound and a polythiol compound has problems that, for example, when an optical component is produced using a polymerizable composition for optical components prepared using a low purity polythiol compound, the optical component may unintendedly be colored or may be colored after heating or exposure to light. If the occurrence of the coloring is attempted to be suppressed by adjusting the type or component ratio of a polyisocyanate compound and a polythiol compound, another problem about other characteristics required for spectacle lenses, such as lower tensile strength, tends to occur. Thus, the polymerizable composition for optical components including a polyisocyanate compound and a polythiol compound is required to be further improved in view of the prevention of the occurrence of coloring and the securement of other characteristics.
Thus, an embodiment of the present disclosure relates to a polymerizable composition for optical components, which can prevent the occurrence of coloring while keeping the required strength for optical components when an optical component is produced using the polymerizable composition for optical components.

[Solution to Problem]

A polymerizable composition for optical components of one embodiment of the present disclosure includes

a polyisocyanate compound (A) and a polythiol compound (B1), and
the equivalent ratio (A/B1) is 80/100 to 95/100, wherein the equivalent ratio (A/B1) represents a ratio of an equivalent A of the polyisocyanate compound (A) calculated using a molecular weight and a functional group number of the polyisocyanate compound (A) to an equivalent B1 of the polythiol compound (B1) calculated using a molecular weight and a functional group number of the polythiol compound (B1).

[Advantageous Effects of Invention]

According to the polymerizable composition for optical components of an embodiment of the present disclosure, a polymerizable composition for optical components capable of preventing the occurrence of coloring while keeping the required strength for optical components when an optical component is produced using the polymerizable composition for optical components can be provided.

[Description of Embodiments]

Each of the lower and upper limits steppedly described in preferred numerical ranges (for example, a range of content or the like) used herein may be independently combined. For example, from the statement "preferably 10 to 90, more preferably 30 to 60", a range of "10 to 60", which combines a "more preferred lower limit (10)" and "a more preferred upper limit (60)", may be adopted.

[Polymerizable Composition for Optical Components]

A polymerizable composition for optical components according to one embodiment of the present disclosure includes a polyisocyanate compound (A) and a polythiol compound (B1). Furthermore, the equivalent ratio (A/B1) is 80/100 to 95/100, wherein the equivalent ratio (A/B1) represents a ratio of an equivalent A of the polyisocyanate compound (A) calculated using a molecular weight and a functional group number of the polyisocyanate compound (A) to an equivalent B1 of the polythiol compound (B1) calculated using a molecular weight and a functional group number of the polythiol compound (B1).

According to the polymerizable composition for optical components of the above embodiment, a polymerizable composition for optical components capable of preventing the unintended occurrence of the coloring while keeping the required strength for optical components when an optical component is produced using the polymerizable composition for optical components can be provided.

<Polyisocyanate Compound (A)>

Examples of the polyisocyanate compound (A) include a polyisocyanate compound having an aromatic ring, an alicyclic polyisocyanate compound, a linear or branched aliphatic polyisocyanate compound, and the like.

Examples of the aromatic polyisocyanate compound include diisocyanatobenzene, 2,4-diisocyanatotoluene, ethylphenylene diisocyanate, isopropylphenylene diisocyanate, dimethylphenylene diisocyanate, diethylphenylene diisocyanate, diisopropyl phenylene diisocyanate, trimethylbenzene triisocyanate, benzene triisocyanate, biphenyl diisocyanate, toluidine diisocyanate, 4,4'-methylenebis(phenyl isocyanate), 4,4'-methylenebis(2-methylphenyl isocyanate), bibenzyl-4,4'-diisocyanate, bis(isocyanatophenyl)ethylene, bis(isocyanatomethyl)benzene, bis(isocyanatoethyl)benzene, bis(isocyanatopropyl)benzene, $\alpha,\alpha,\alpha',\alpha'$-tetramethylxylylene diisocyanate, bis(isocyanatobutyl)benzene, bis(isocyanatomethyl)naphthalene, bis(isocyanatomethylphenyl)ether, 2-isocyanatophenyl-4-isocyanatophenyl sulfide, bis(4-isocyanatophenyl) sulfide, bis(4-isocyanatomethylphenyl) sulfide, bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methoxy-4-isocyanatophenyl) disulfide, bis(4-methoxy-3-isocyanatophenyl) disulfide, and the like.

Examples of the alicyclic polyisocyanate compound include diisocyanatocyclohexane, isophorone diisocyanate, bis(isocyanatomethyl)cyclohexane, dicyclohexylmethane diisocyanate, bis(isocyanatomethyl)bicycloheptane, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, 4,5-bis(isocyanatomethyl)-2-methyl-1,3-dithiolane, and the like.

Examples of the linear or branched aliphatic polyisocyanate compound include hexamethylene diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanate-4-isocyanatomethyloctane, bis(isocyanatoethyl) carbonate, bis(isocyanatoethyl) ether, lysine diisocyanatomethyl ester, lysine triisocyanate, bis(isocyanatomethyl) sulfide, bis(isocyanatoethyl) sulfide, bis(isocyanatopropyl) sulfide, bis(isocyanatohexyl) sulfide, bis(isocyanatomethyl) sulfone, bis(isocyanatomethyl) disulfide, bis(isocyanatoethyl) disulfide, bis(isocyanatopropyl) disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-pentane, 1,2,3-tris(isocyanatomethylthio)propane, 1,2,3-tris(isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanatomethylthiophene, 4-isocyanatoethylthio-2,6-dithia-1,8-octane diisocyanate, 1,2-diisothiocyanatoethane, and 1,6-diisothiocyanatohexane.

The polyisocyanate compound (A) may be used singly or in combination of two or more thereof.

The polyisocyanate compound (A) is preferably at least one selected from the group consisting of bis(isocyanatomethyl)benzene, isophorone diisocyanate, hexamethylene diisocyanate, bis(isocyanatomethyl)cyclohexane, dicyclohexylmethane diisocyanate, and bis(isocyanatomethyl)bicycloheptane, and more preferably at least one selected from the group consisting of bis(isocyanatomethyl)benzene, bis(isocyanatomethyl)cyclohexane, dicyclohexylmethane diisocyanate, and bis(isocyanatomethyl)bicycloheptane.

<Polythiol Compound (B1)>

Examples of the polythiol compound (B1) include an ester compound of a polyol compound and a mercapto group-containing carboxylic acid compound, a linear or branched aliphatic polythiol compound, a polythiol compound having an alicyclic structure, an aromatic polythiol compound, and the like.

In the ester compound of a polyol compound and a mercapto group-containing carboxylic acid compound, examples of the polyol compound include compounds having two or more hydroxyl groups in the molecule, such as ethylene glycol, diethylene glycol, propanediol, propanetriol, butanediol, trimethylolpropane, bis(2-hydroxyethyl) disulfide, pentaerythritol, dipentaerythritol, and the like.

Examples of the mercapto group-containing carboxylic acid compound include thioglycolic acid, mercaptopropionic acid, a thiolactic acid compound, thiosalicylic acid, and the like.

Examples of the ester compound of the polyol compound and the mercapto group-containing carboxylic acid compound include ethylene glycol bis(2-mercapto acetate), diethylene glycol bis(2-mercapto acetate), propanetriol tris(2-mercapto acetate), propanediol bis(2-mercapto acetate), butanediol bis(2-mercapto acetate), trimethylolpropane tris(2-mercapto acetate), trimethylolpropane tris(3-mercapto propionate), ethylene bis(hydroxyethyl sulfide)bis(2-mercapto acetate), butanediol bis(2-mercapto acetate), butane diol bis(3-mercapto propionate), ethylene glycol bis(3-mercapto propionate), diethylene glycol bis(3-mercapto propionate), trimethylolpropane bis(3-mercapto propionate), pentaerythritol tetrakis(2-mercapto acetate), pentaerythritol tetrakis(3-mercapto propionate), dipentaerythritol hexakis(2-mercapto acetate), dipentaerythritol hexakis(3-mercapto propionate), or the like.

Examples of the linear or branched aliphatic polythiol compound include 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 2,2-dimethylpropane-1,3-dithiol, 3,4-dimethoxybutane-1,2-dithiol, 2,3-dimercapto-1-propanol, 1,2-dimercaptopropyl methyl ether, 2,3-dimercaptopropyl methyl ether, 2,2-bis(mercaptomethyl)-1,3-propanedithiol, bis(2-mercaptoethyl) ether, bis(2-mercaptoethyl) sulfide, bis(2-mercaptoethyl) disulfide, 4-mercaptomethyl-1,8-dimercapto-3,6-dithiaoctanebis, bis(mercaptomethyl)-3,6,9-trithiaundecane dithiol, and the like.

Examples of the polythiol compound having an alicyclic structure include 1,1-cyclohexanedithiol, 1,2-cyclohexanedithiol, methylcyclohexanedithiol, bis(mercaptomethyl)cyclohexane, bis(mercaptomethyl)dithiane, and the like.

Examples of the aromatic polythiol compound include dimercaptobenzene, bis(mercaptomethyl)benzene, bis(mercaptoethyl)benzene, trimercaptobenzene, tris(mercaptomethyl)benzene, tris(mercaptoethyl)benzene, dimercaptobiphenyl, 4,4'-dimercaptobibenzyl, 2,5-toluenedithiol, naphthalenedithiol, 2,4-dimethylbenzene-1,3-dithiol, 4,5-dimethylbenzene-1,3-dithiol, 9,10-anthracene dimethanethiol, 1,3-di(p-methoxyphenyl)propane-2,2-dithiol, 1,3-diphenylpropane-2,2-dithiol, phenylmethane-1,1-dithiol, 2,4-di(p-mercaptophenyl)pentane, and the like.

These polythiol compounds may be used singly or in a combinations of two or more thereof.

The polythiol compound (B1) is preferably one or more selected from the group consisting of bis(mercaptomethyl)dithiane, pentaerythritol tetrakis(2-mercaptoacetate), pentaerythritol tetrakis(3-mercaptopropionate), 4-mercaptmethyl-1,8-dimercapto-3,6-dithiaoctane, bis(mercaptomethyl)-3,6,9-trithiaundecanedithiol, trimethylolpropane tris(2-mercaptoacetate), trimethylolpropane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate), and more preferably one or more selected from the group consisting of bis(mercaptomethyl)-3,6,9-trithiaundecanedithiol, bis(mercaptomethyl)dithiane, pentaerythritol tetrakis(2-mercaptoacetate), pentaerythritol tetrakis(3-mercaptopropionate), and 4-mercaptmethyl-1,8-dimercapto-3,6-dithiaoctane.

Further, bis(mercaptomethyl)-3,6,9-trithiaundecanedithiol is preferably a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

An embodiment of the polythiol compound (B1) includes a polythiol compound having two or more sulfide bonds and two or more mercapto groups.

An embodiment of the polythiol compound (B1) includes a polythiol compound having two or more sulfide bonds and three or more mercapto groups.

In addition, an embodiment of the polythiol compound (B1) is a mixture of plural kinds of polythiol compounds.

The polythiol compound (B1) is preferably selected from the following mixtures.

[1] A mixture of 2,5-bis(mercaptomethyl)-1,4-dithiane and pentaerythritol tetrakis(2-mercaptoacetate)

[2] A mixture of 4-mercaptomethyl-1,8-dimercapto-3,6-dithiaoctane and pentaerythritol tetrakis(3-mercaptopropionate)

[3]: A mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol

Suitable examples of combinations of the polythiol compound (A) and the polyisocyanate compound (B1) include the following [1] to [3].

[1] 1,3-Bis(isocyanatomethyl)benzene and a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol,

[2] 1,3-Bis(isocyanatomethyl)cyclohexane and a mixture of 2,5-bis(mercaptomethyl)-1,4-dithiane and pentaerythritol tetrakis(2-mercapto acetate)

[3] A mixture of 2,5-bis(isocyanatomethyl)-bicyclo[2.2.1]heptane and 2,6-bis(isocyanatomethyl)-bicyclo[2.2.1]heptane and a mixture of 4-mercaptomethyl -1,8-dimercapto-3,6-dithiaoctane and pentaerythritol tetrakis(3-mercapto propionate).

<Other Thiol Group-Containing Substance>

The polymerizable composition for optical components according to one embodiment of the present disclosure may further include another thiol-group containing substance than the polythiol compound (B1). The other thiol group-containing substance is a substance including a compound having at least a thiol group and shows a peak at a position corresponding to a retention time later from a position of a peak of the polythiol compound (B1) in a chromatogram obtained by high performance liquid chromatography (HPLC) analysis. The other thiol group-containing substance may include a polythiol compound having a structure in which a plurality of polythiol compounds (B1) are coupled.

The way for making another thiol group-containing substance exist in the polymerizable composition for optical components is not particularly restricted, and for example, adding a thiol group-containing substance showing the above peak in the above chromatogram or a polythiol compound in which a plurality of polythiol compounds (B1) are coupled can make another thiol group-containing substance exist in the polymerizable composition for optical components.

Alternatively, when the polymerizable composition for optical components is prepared by mixing the first composition including a polyisocyanate compound (A) and the second composition including the polythiol compound (B1), the second composition including the polythiol compound (B1) and a substance generated as a by-product as another thiol group-containing substance is prepared while adjusting the reaction condition of the polythiol compound (B1) and the number or time of purifications after the reaction, followed by mixing the second composition with the first composition, thereby making another thiol group-containing substance exist in the polymerizable composition for optical components.

<Equivalent Ratio of Polyisocyanate Compound (A) and Polythiol Compound (B1)>

The equivalent ratio (A/B1) represented by a ratio of an equivalent A of the polyisocyanate compound (A) calculated using the molecular weight and the functional group number of the polyisocyanate compound (A) to an equivalent B1 of the polythiol compound (B1) calculated using the molecular weight and the functional group number of the polythiol compound (B1) is 80/100 to 95/100, preferably 90/100 to 94/100, and more preferably 92/100 to 94/100. When the equivalent ratio of the polyisocyanate compound (A) and the polythiol compound (B1) is within the above range, optical components with less coloring can be produced from the polymerizable composition for optical components.

The total content of the polyisocyanate compound (A) and the polythiol compound (B1) is preferably 60 mass% or more, more preferably 80 mass% or more in relation to the total mass of the polymerizable composition for optical components.

<Other Components>

The polymerizable composition for optical components may include various additives such as an ultraviolet absorber, a polymerization catalyst, a release agent, an antioxidant, a coloring inhibitor, and a fluorescent whitening agent as other components.

(Ultraviolet Absorber)

The ultraviolet absorber preferably has a maximum absorption wavelength of 345 nm or larger in a chloroform solution.

Examples of the ultraviolet absorber include a benzophenone compound, a benzotriazole compound, dibenzoylmethane, 4-tert-butyl-4'-methoxybenzoylmethane, and the like.

Examples of the benzophenone compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, 2,2'-dihydroxy-4-methoxybenzophenone, and the like.

Examples of the benzotriazole compound include 2-(2-hydroxy-5-methylphenyl)-2H-benzotriazole, 2-(2-hydroxy-3,5-di-tert-butylphenyl)-5-chloro-2H-benzotriazole, 2-(2-hydroxy-3-tert-butyl-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-tert-octylphenyl)-2H-benzotriazole, 2-(2-hydroxy-4-octyloxyphenyl)-2H-benzotriazole, and the like. These may be used singly or in combination of two or more thereof.

The amount of the ultraviolet absorber is preferably 0.01 part by mass or more, more preferably 0.05 parts by mass or more, further preferably 0.1 part by mass or more, further preferably 0.3 parts by mass or more, further preferably 0.5 parts by mass or more, and further preferably 0.8 parts by mass or more, and preferably 5 part by mass or less, more preferably 3 parts by mass or less, more preferably 2 parts by mass or less, and further preferably 1 part by mass or less with respect to 100 parts by mass of the total amount of the polythiol compound and the polyisocyanate compound.

(Polymerization Catalyst)

The polymerization catalyst is preferably an organotin compound and more preferably an alkyl tin halide compound or an alkyl tin compound.

Examples of the alkyl tin halide compound include dibutyltin dichloride, dimethyltin dichloride, monomethyltin trichloride, trimethyltin chloride, tributyltin chloride, tributyltin fluoride, dimethyltin dibromide, and the like.

Examples of the alkyl tin compound include dibutyltin diacetate, dibutyltin dilaurate, and the like.

Among these, dibutyltin dichloride, dimethyltin dichloride, dibutyltin diacetate, and dibutyltin dilaurate are preferable.

The amount of the polymerization catalyst to be added is preferably 0.001 part by mass or more, more preferably 0.005 parts by mass or more, and preferably 1 part by mass or less, more preferably 0.5 parts by mass or less, and further preferably 0.1 part by mass or less with respect to 100 parts by mass of the total amount of the polythiol compound and the polyisocyanate compound.

(Release Agent)

Examples of the release agent include phosphoric acid ester compounds such as isopropyl acid phosphate, butyl acid phosphate, octyl acid phosphate, nonyl acid phosphate, decyl acid phosphate, isodecyl acid phosphate, isodecyl acid phosphate, tridecyl acid phosphate, stearyl acid phosphate, propylphenyl acid phosphate, butylphenyl acid phosphate, butoxyethyl acid phosphate, and the like. The phosphoric acid ester compound may be either a phosphoric acid monoester compound or a phosphoric acid diester compound, but it is preferably a mixture of a phosphoric acid monoester compound and a phosphoric acid diester compound.

The amount of the release agent to be added is preferably 0.01 part by mass or more, and more preferably 0.05 parts by mass or more, and preferably 1.00 part by mass or less, and more preferably 0.50 parts by mass or less with respect to 100 parts by mass of the total amount of the polythiol compound and the polyisocyanate compound.

[Preparation method of Polymerizable Composition for Optical Components]

The polymerizable composition for optical components may be prepared by mixing a first composition including the polyisocyanate compound (A), a second composition including the polythiol compound (B1), and another optional component mentioned above in a normal method.

The components may be mixed at once, or each of the components may be sequentially mixed in any order. The specific mixing method is not particularly restricted, and any method known as the method for preparing the polymerization composition may be used without any limitation.

The polymerizable composition for optical components according to the present embodiment has an equivalent ratio A/B1 of 80/100 to 95/100, wherein the equivalent ratio A/B1 represents a ratio of an equivalent A of the polyisocyanate compound (A) calculated using the molecular weight and the functional group number of the polyisocyanate compound (A) to an equivalent B1 of the polythiol compound (B1) calculated using the molecular weight and the functional group number of the polythiol compound (B1). The equivalent ratio A/B1 is preferably 85/100 to 95/100, and more preferably 85/100 to 90/100.

If the equivalent ratio A/B1 of the polymerizable composition for optical components exceeds 95/100, the occurrence of coloring cannot be sufficiently suppressed in optical components produced using the polymerizable composition for optical components. In contrast, if the equivalent ratio A/B1 is less than 80/100, the sufficient tensile strength required for optical components cannot be obtained.

The polymerizable composition for optical components having an equivalent ratio A/B1 within the above numerical range may be produced by preparing the first composition of a mass corresponding to the equivalent A of the polyisocyanate compound (A) and the second composition of a mass corresponding to the equivalent (B1) of the polythiol compound (B1) in a combination of the equivalent A and the equivalent B1 satisfying the above numerical range of the equivalent A/B1, and mixing the compositions.

When the polyisocyanate compound (A) and the polythiol compound (B1) are each a mixture of plural kinds of compounds, the equivalent of the mixture is calculated as a sum of values obtained by multiplying the mass proportion of each component on an equivalent of the compound. For example, in a case where the equivalents of two kinds of compounds are X and Y, respectively, and the mass proportion is 40:60, the equivalent of the mixture may be calculated as $X \times 40/100 + Y \times 60/100$.

Note that, when a polymerizable composition for optical components containing a polyisocyanate compound and a polythiol compound is produced, a composition including a polyisocyanate compound and a composition including a polythiol compound is generally mixed in a mass ratio such that the equivalent determined from the molecular and the functional group of the polyisocyanate compound and the equivalent determined from the molecular and the functional group of the polythiol compound will be 1:1.

However, a polymerizable composition for optical components may be produced using a composition with slightly low content purity of the polythiol compound in some cases where a very small amount of by-products occurs in the synthetic process of the polythiol compound or a polythiol raw material with low purity is used. According to the study by the present inventors, it has been found that the coloring unintendedly occurs, or the coloring occurs after heating or exposure to light when an optical component is produced using such a polymerizable composition for optical components.

On the contrary, the polymerizable composition for optical components of the present embodiment ensures the tensile strength required for optical components and can sufficiently suppress the occurrence of the coloring due to the equivalent ratio A/B1 within the above numerical range.

Although the reasons why the polymerizable composition for optical components of this embodiment is not limited, one of the reasons is that the above effect is presumed to be exhibited on the following reason. That is, when the reaction between the polyisocyanate compound (A) and the polythiol compound (B1) progresses, unreacted polyisocyanate compound (A) remains due to the low purity of the polythiol compound (B1) in the composition containing the polythiol compound (B1) or the like. As a result, the light-absorbing performance changes because of the difference in light-absorbing performance between this unreacted polyisocyanate compound (A) and a polymerization product, or the change of properties of the polyisocyanate compound (A) by heating or exposure to light. The number of thiol groups in the polythiol compound existing in a composition exceeds the number of the isocyanato groups in the isocyanate compound when the equivalent ratio A/B1 is within the above numerical range, and therefore, the existing amount of unreacted isocyanate compound decreases. It is considered that the polythiol compound (B1) and other thiol group-containing substances generated as by-products in the synthetic process of the polythiol compound (B1) do not greatly change the light-absorbing performance of polymerization products and less likely changes the property even by heating or exposure to light. Because of these reasons, increasing the amounts of the polythiol compound (B1) and a thiol group-containing substance (B2) within a range such that the mechanical strength of a polymerization product does not greatly deteriorate can achieve both the suppression of the occurrence of coloring and sufficient mechanical strength.

The second composition containing the polythiol compound (B1) to be used may have a purity determined from the thiol value of 96.0% or less. The thiol value may be determined by the method disclosed in the Examples described below.

Using a composition with a purity of 96% or less reduces the limitations required for the synthetic method and raw materials of the polythiol compound (B1) and eliminates the need for advanced purifications or the like, and therefore, a remarkably high yield tends to be achieved and a second composition, as well as a polymerizable composition for optical components can be produced more easily at a lower cost.

Although the lower limit of the purity of the second composition is not particularly limited, it is preferably 80% or more, more preferably 88% or more, and further preferably 92% or more in view of preventing coloring the optical components.

The purity of the first composition containing a polyisocyanate compound (A) is not particularly restricted, but for example, it may be 98 mass% or higher, 99 mass% or higher, 99.5 mass% or higher, or 100 mass% with respect to the total mass of the first composition.

[Optical Component]

An optical component may be obtained by polymerizing the above polymerizable composition for optical components to generate a polymerization product.

Examples of the optical components include spectacle lenses, camera lenses, prisms, optical fibers, substrates for recording media used for optical disks, magnetic disks, etc., optical filters attached to a display of a computer, and the like. Among them, a spectacle lens is preferable, and a base material for a spectacle lens is more preferable.

The polymerization conditions of the polymerizable composition for optical components may be appropriately set according to the polymerizable composition.

The polymerization initiation temperature is preferably 0°C or more, more preferably 10°C or more, and preferably 50°C less, more preferably 40°C or less. It is preferable to raise the temperature from the polymerization initiation temperature and then heat and cure to form the composition. For example, the maximum raised temperature is usually 110°C or more and 130°C or less.

After completion of the polymerization, the spectacle lens may be released, and annealing treatment may be performed. The temperature of the annealing treatment is preferably 100°C to 150°C.

When the optical component is a spectacle lens, the polymerization is preferably a cast polymerization method. The spectacle lens can be obtained, for example, by injecting the polymerizable composition into a mold die which is a combination of a glass or metal mold and a tape or a gasket and performing polymerization.

[Spectacle Lens]

When the optical component is prepared in the form of a spectacle lens, the optical component may be used as it is as a spectacle lens, or a cut product of the optical component may be used as a spectacle lens.

The spectacle lens may include another layer.

The surface shape of the spectacle lens is not particularly restricted and may be any of a flat surface, a convex surface, a concave surface, and the like.

The spectacle lens may be any of a single focus lens, a multifocal lens, a progressive power lens, and the like. For example, as an example, with respect to a progressive power lens, normally, a near portion region (near portion) and a progressive portion region (intermediate region) are included in a lower region, and a distance portion region (distance portion) is included in the lower region.

The spectacle lens may be a finish type spectacle lens or a semi-finish type spectacle lens.

The thickness and diameter of the spectacle lens are not particularly limited, and the thickness is normally 1 to 30 mm, and the diameter is normally 50 to 100 mm.

The refractive index ne of the spectacle lens is preferably 1.53 or higher, more preferably 1.55 or higher, more preferably 1.58 or higher, further preferably 1.60 or higher, further preferably 1.67 or higher, further preferably 1.70 or higher, and preferably 1.80 or less.

A spectacle lens according to the present embodiment includes a base material made of the above-described resin composition.

The spectacle lens may further include one or more selected from the group consisting of a hard coat layer, a primer layer, an antireflection film, and a water repellent film.

The hard coat layer is provided for improving the abrasion resistance and can be formed by coating a coating solution having a fine particulate inorganic substance such as an organosilicon compound, tin oxide, silicon oxide, zirconium oxide, titanium oxide, and the like.

The primer layer is provided for improving the impact resistance and includes, for example, polyurethane as the main component. Here, the polyurethane content is preferably 50 mass% or more in the primer layer.

Examples of the antireflection film include films obtained by laminating silicon oxide, titanium dioxide, zirconium oxide, tantalum oxide, and the like.

The water repellent film can be formed using an organosilicon compound having a fluorine atom.

With regard to the examples, content, and various physical properties of the above-described components, the matters described as exemplary or preferred ranges in the detailed description of the disclosure may be adopted in any combination.

In addition, where the composition described in the examples is adjusted to the composition described in the detailed description of the invention, the invention can be carried out in the same manner as in the examples over the entire claimed scope of the composition.

[Examples]

The present disclosure will be further specifically described with reference to examples. The evaluation of colored states and the measurement of the tensile strength of optical components that were polymerization products from the polymerizable composition for optical components were performed in the following procedures.

<Colored States>

The colored states were measured by a spectrophotometric transmittance meter "DOT-3", produced by Murakami Color Research Laboratory. Two-millimeter thick, 0.00 D plastic lenses were used for the measurement.

(1) Initial Colored State

The YI values of unannealed 0.00 D lenses were measured using the DOT-3.

(2) Colored State after Heating Treatment

The YI values of 0.00 D lenses after the annealing treatment at 120°C for two hours were measured using the DOT-3.

(3) Colored State after Exposure to Light

An exposure treatment was performed on 0.00 D lenses after the above annealing treatment for 200 hours using the Xenon Weather Meter "XA25", produced by Suga Test Instruments Co., Ltd. The YI values of treated lenses were measured using the DOT-3.

<Measurement of Tensile Strength>

The plastic lenses (0.00 D) obtained in Examples and Comparative Examples were rounded to a diameter of 50 mm to prepare sample lenses for tensile strength measurement.

Holes having a diameter of 1.6 mm were opened at two positions facing each other across the center 21.0 mm away from the center of each sample lens to form two holes in each sample lens.

Fixing pins to fix the sample lenses to the tensile testing machine were attached to respective holes of the sample lens, the sample lens was set in the tensile tester, and the tensile strength was measured (pulling rate: 5.0 mm/min). A universal testing machine RTC-1225A, manufactured by Orientec Co., Ltd., was used as the tensile testing machine. Sample lenses showing a tensile strength of less than 73.0 N/mm$^2$ were rejected.

<Measurement of Purity of Composition Containing Polythiol Compound>

The purity (%) of a composition containing a polythiol compound (B1) was determined by first determining the total thiol value of the polythiol compound (B1) and another thiol group-containing substance in the composition in a manner described below and dividing the thiol value by an equivalent determined from a known molecular weight and a functional group of the polythiol compound (B1).

[1] 0.2 g of a measuring sample was precisely weighed.

[2] 25 ml of chloroform was added to dissolve the sample, then 25 ml of methanol was added and mixed to prepare a uniform solution.

[3] Titration was performed using a 0.05 mol/l iodine solution for titration (N/10). The point at which the solution was colored yellow was regarded as the end point.

[4] A blank measurement was performed in a similar procedure.

$$\text{Thiol value} = (S \times 1000)/((C - D) \times f \times 0.1)$$

S: Sample amount (g)
C: Titration at the end point (ml)
D: Blank amount (ml)
f: Factor of iodine solution

$$\text{Purity (\%)} = (\text{equivalent determined from molecular weight and functional group/measured thiol value}) \times 100$$

<Example 1>

48.0 parts by mass of 1,3-bis(isocyanatomethyl)benzene, which was a polyisocyanate compound (A), as a first composition, 0.15 parts by mass of butoxy ethyl acid phosphate (JP-506H, manufactured by Johoku Chemical Co., Ltd.)as a release agent, 0.50 parts by mass of SEESORB 701, manufactured by Shipro Kasei Kaisha, Ltd., as an ultraviolet absorber, dimethyl tin dichloride in an amount of 100 ppm by mass relative to the total amount of polyisocyanate compound (A) and the polythiol compound (B1) as a catalyst, and a blueing dye (Diaresin Blue J, manufactured by Mitsubishi Chemical Corporation) in an amount of 550 ppb by mass relative to the total amount of polyisocyanate compound and the polythiol compound were used, and these were mixed and dissolved, to form a homogeneous solution.

To the solution, 52.0 parts by mass of a second composition (purity: 95.8%) containing a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol was added as the polythiol compound (B1) and mixed to prepare a homogeneous solution. Furthermore, this solution was deaerated at 200 Pa for one hour and filtrated with a 5.0μm PTFE (polytetrafluoroethylene) filter to obtain a polymerizable composition 1 for optical components.

The obtained polymerizable composition 1 for optical components was injected into a mold die for 0.00 D semi-finish lenses (center thickness: 2 mm; edge thickness: 2 mm) including an upper mold having a diameter of 75 mm and a curvature radius of 112 mm, a lower mold having a curvature radius of 112 mm, and a tape pasted on the side surfaces of both.

The above mold die into which the polymerizable composition for optical components was put in an electric furnace, then the temperature was raised from 20°C to 120°C over 20 hours, and the polymerizable composition 1 for optical components was polymerized for further three hours at 120°C. After completing the polymerization, the mold dies were taken out of the electric furnace, and the content was released from the mold dies, thereby obtaining a 0.00 D finish lens.

<Example 2>

A 0.00 D finish lens having a similar maximum thickness to that of Example 1 was prepared in a similar manner to Example 1, except that the used amount of the first composition was changed to 45.0 parts by mass, and the used amount of the second composition was changed to 55.0 parts by mass.

<Example 3>

A 0.00 D finish lens having a similar maximum thickness to that of Example 1 was prepared in a similar manner to Example 1, except that the used amount of the first composition was changed to 49.4 parts by mass, and the used amount of the second composition was changed to 50.6 parts by mass.

<Example 4>

A 0.00 D finish lens having a similar maximum thickness to that of Example 1 was prepared in a similar manner to Example 1, except that 45.0 parts by mass of 1,3-(bisisocyanatomethyl)cyclohexane, which was a polyisocyanate compound (A), was used as the first composition, a second composition containing a mixture of 25.0 parts by mass of pentaerythritol tetrakis(2-mercaptoacetate) (purity: 93.2%) and 30.0 parts by mass of 2,5-bis(mercaptomethyl)-1,4-dithiane (purity: 95.5%) was used, dimethyl tin dichloride in an amount of 0.5 parts by mass relative to the total amount of the polyisocyanate compound and the polythiol compound (B1) was used as a catalyst, and 1.1 parts by mass of SEESORB 701, manufactured by Shipro Kasei Kaisha, Ltd., as an ultraviolet absorber.

<Example 5>

A 0.00 D finish lens having a similar maximum thickness to that of Example 1 was prepared in a similar manner to Example 1, except that 48.1 parts by mass of a mixture of 2,5-bis(isocyanatomethyl)-bicyclo[2.2.1]heptane and 2,6-bis(isocyanatomethyl)-bicyclo[2.2.1]heptane, which were polyisocyanate compounds (A), was used as the first composition, a second composition containing a mixture of 24.0 parts by mass of pentaerythritol tetrakis(3-mercaptopropionate) (purity: 94.2%) and 27.9 parts by mass of 4-mercaptomethyl-1,8-dimercapto-3,6-dithiaoctane (purity: 95.0%) was used as the polythiol compound (B1), dimethyl tin dichloride in an amount of 0.05 parts by mass relative to the total amount of the polyisocyanate compound and the polythiol compound was used as a catalyst, and 1.1 parts by mass of SEESORB 701, manufactured by Shipro Kasei Kaisha, Ltd., as an ultraviolet absorber.

<Comparative Example 1>

A 0.00 D finish lens having a similar maximum thickness to that of Example 1 was prepared in a similar manner to Example 1, except that the used amount of the first composition was changed to 50.6 parts by mass, and the used amount of the second composition was changed to 49.4 parts by mass.

<Comparative Example 2>

A 0.00 D finish lens having a similar maximum thickness to that of Example 1 was prepared in a similar manner to Example 1 except that the used amount of the first composition was changed to 44.5 parts by mass, and the used amount of the second composition was changed to 55.5 parts by mass.

<Comparative Example 3>

A 0.00 D finish lens having a similar maximum thickness to that of Example 1 was prepared in a similar manner to Example 4, except that the used amount of the first composition was changed to 47.6 parts by mass, and the used amount of the second composition was changed to 30.0 parts by mass.

<Comparative Example 4>

A 0.00 D finish lens having a similar maximum thickness to that of Example 1 were prepared in a similar manner to Example 5, except that the used amount of the first composition was changed to 50.7 parts by mass, and the polythiol compound (B1) was changed to a second composition containing a mixture of 22.8 parts by mass of pentaerythritol tetrakis(3-mercaptopropionate) (purity: 94.2%) and 26.5 parts by mass of 4-mercaptomethyl-1,8-dimercapto-3,6-dithiaoctane (purity: 95.0%).

Table 1 shows the results.

[Table 1]

Table 1

| | Polymerizable composition for optical components | | | | | Evaluation | | | |
| | Polyisocyanate compound | Polythiol compound | Purity of Polythiol compound [%] | Equivalent ratio | | Colored state | | | Tensile strength [N/mm$^2$] |
| | | | | R-NCO | R-SH | Initial | After heating | After exposure to light | |
| Example 1 | I-1 | T-4 | 95.8 | 90 | 100 | 1.1 | 1.2 | 1.4 | 79.3 |
| Example 2 | I-1 | T-4 | 95.8 | 80 | 100 | 1.0 | 1.1 | 1.2 | 76.4 |
| Example 3 | I-1 | T-4 | 95.8 | 95 | 100 | 1.2 | 1.3 | 1.5 | 80.2 |
| Example 4 | 1-3 | T-1 + T-2 | 95.5, 93.2 | 90 | 100 | 1.4 | 1.4 | 1.4 | 84.5 |
| Example 5 | 1-2 | T-3 + T-5 | 95.0, 94.2 | 90 | 100 | 1.2 | 1.3 | 1.4 | 78.0 |
| Comparative Example 1 | I-1 | T-4 | 95.8 | 100 | 100 | 1.3 | 1.5 | 1.8 | 79.0 |
| Comparative Example 2 | I-1 | T-4 | 95.8 | 78 | 100 | 1.1 | 1.1 | 1.2 | 72.1 |
| Comparative Example 3 | 1-3 | T-1 + T-5 | 95.5, 93.2 | 100 | 100 | 1.6 | 1.6 | 1.7 | 85.1 |
| Comparative Example 4 | 1-2 | T-1 + T-2 | 95.5, 93.2 | 100 | 100 | 1.3 | 1.4 | 1.6 | 78.4 |

* The abbreviations in Table 1 are as follows.
R-NCO: A polyisocyanate compound is represented.
R-SH: A polythiol compound(s) is/are represented.
1-1: 1,3-Bis(isocyanatomethyl)benzene
1-2: Mixture of 2,5-bis(isocyanatomethyl)-bicyclo[2.2.1]heptane and 2,6-bis(isocyanatomethyl)bicyclo[2.2.1]heptane.
1-3: 1,3-Bis(isocyanatomethyl)cyclohexane
T-1: 2,5-Bis(mercaptomethyl)-1,4-dithiane
T-2: Pentaerythritol tetrakis(2-mercaptoacetate)
T-3: 4-Mercaptomethyl-1,8-dimercapto -3,6-dithiaoctane
T-4: Mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol
T-5: Pentaerythritol tetrakis(3-mercaptopropionate)

As apparent from Table 1, when optical components were prepared using polymerizable compositions for optical components of Examples 1 to 5 having equivalent ratios A/B1 within the range from 80/100 to 95/100, it is found that the initial YI values were small and the occurrence of coloring was suppressed. In addition, the increase of YI values was small even after heating treatment or treatment of exposure to light, and it is found that the coloring is hardly promoted by heating or exposure to light. Furthermore, it is found that optical components produced using these polymerizable compositions for optical components can ensure high tensile strengths.

Meanwhile, when the polymerizable compositions for optical components in Comparative Examples 1 to 4 having equivalent ratios A/B1 out of the range from 80/100 to 90/100 were used, the initial YI values may be large, and the occurrence of coloring may not be sufficiently suppressed, or even though the initial coloring is suppressed, the YI value may increase after heating treatment or treatment of exposure to light and the suppression of the coloring may not be sufficient, or the tensile strength may be too low; thus, the suppression of coloring and the securement of the tensile strength which could not be both achieved.

Finally, the embodiments of the present disclosure are summarized as follows.

The polymerizable composition for optical components of one embodiment of the present disclosure includes a polyisocyanate compound (A) and a polythiol compound (B1) and has an equivalent ratio (A/B1) of 80/100 to 95/100, wherein the equivalent ratio (A/B1) represents a ratio of an equivalent A of the polyisocyanate compound (A) calculated using the molecular weight and the functional group number of the polyisocyanate compound (A) to an equivalent B1 of the entire polythiol components in the polymerizable composition for optical components calculated using the thiol value of the polymerizable composition for optical components and the molecular weight of the polythiol compound (B1).

According to the above embodiment, a polymerizable composition for optical components capable of preventing the occurrence of coloring while keeping the required strength for optical components even when an optical component is produced can be provided.

The embodiments disclosed here are to be understood as examples and do not restrict the scope of the invention in the entire points. The scope of the disclosure is determined not by the above description but by the claims and is intended to include the interpretations that are equivalent to the claims and all modifications within the scope of claims.

In the present disclosure, with regard to the examples, content, and various physical properties of the above-described components, the matters described as exemplary or preferred ranges in the detailed description of the invention may be adopted in any combination.

In addition, where the composition described in the examples is adjusted to the composition described in the detailed description of the invention, the embodiments relating to the disclosure can be carried out in the same manner as in the examples over the entire composition range claimed.

**Claims**

1.   A polymerizable composition for optical components, comprising a polyisocyanate compound (A) and a polythiol compound (B1),
the polymerizable composition having an equivalent ratio (A/B1) of 80/100 to 95/100, wherein the equivalent ratio (A/B1) represents a ratio of an equivalent A of the polyisocyanate compound (A) calculated using a molecular weight and a functional group number of the polyisocyanate compound (A) to an equivalent B1 of the polythiol compound (B1) calculated using a molecular weight and a functional group number of the polythiol compound (B1).

2.   The polymerizable composition for optical components according to claim 1, wherein the polythiol compound (B1) includes a polythiol compound having two or more sulfide bonds and two or more mercapto groups.

3.   The polymerizable composition for optical components according to claim 1 or 2, wherein the polythiol compound (B1) includes a polythiol compound having two or more sulfide bonds and three or more mercapto groups.

4.   The polymerizable composition for optical components according to any one of claims 1 to 3, wherein the polythiol compound (B1) is a mixture of plural kinds of polythiol compounds.

5.   The polymerizable composition for optical components according to claim 4, wherein the polythiol compound (B1) is

[1] a mixture of 2,5-bis(mercaptomethyl)-1,4-dithiane and pentaerythritol tetrakis(2-mercapto acetate),
[2] a mixture of 4-mercaptomethyl-1,8-dimercapto-3,6-dithiaoctane and pentaerythritol tetrakis(3-mercaptopropionate), or
[3] a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

**6.** The polymerizable composition for optical components according to any one of claims 1 to 5, wherein the polymerizable composition for optical components is a mixture of a first composition including the polyisocyanate compound (A) and a second composition including the polythiol compound (B1), and
the second composition has a purity determined based on a thiol value of 96.0% or less.

**7.** An optical component comprising a polymerized product of the polymerizable composition for optical components according to any one of claims 1 to 6.

**8.** A spectacle lens comprising the optical component according to claim 7.

## INTERNATIONAL SEARCH REPORT

| | International application No. |
|---|---|
| | PCT/JP2020/014088 |

**A. CLASSIFICATION OF SUBJECT MATTER**
C08G 18/38(2006.01)i; G02B 1/04(2006.01)i; G02C 7/00(2006.01)i
FI: C08G18/38 076; G02B1/04; G02C7/00

According to International Patent Classification (IPC) or to both national classification and IPC

**B. FIELDS SEARCHED**

Minimum documentation searched (classification system followed by classification symbols)
C08G18/38; G02B1/04; G02C7/00

Documentation searched other than minimum documentation to the extent that such documents are included in the fields searched
Published examined utility model applications of Japan        1922–1996
Published unexamined utility model applications of Japan      1971–2020
Registered utility model specifications of Japan              1996–2020
Published registered utility model applications of Japan      1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/031075 A1 (HOYA LENS THAILAND LTD.) 03.03.2016 (2016-03-03) claims, paragraphs [0034]–[0039], [0054]–[0055], examples | 1–8 |
| X | JP 2001-330701 A (HOYA CORP.) 30.11.2001 (2001-11-30) claims, paragraphs [0013]–[0014], examples | 1–2, 6–8 |
| A | JP 2018-016778 A (HOYA LENS THAILAND LTD.) 01.02.2018 (2018-02-01) claims, examples | 1–8 |
| A | WO 2016/153061 A1 (HOYA LENS THAILAND LTD.) 29.09.2016 (2016-09-29) claims, examples | 1–8 |
| A | JP 2008-143872 A (MITSUI CHEMICALS, INC.) 26.06.2008 (2008-06-26) claims, examples | 1–8 |
| A | JP 2004-059901 A (HOYA CORPORATION) 26.02.2004 (2004-02-26) claims, examples | 1–8 |

☒ Further documents are listed in the continuation of Box C.          ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 June 2020 (05.06.2020) | 16 June 2020 (16.06.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2020/014088

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-131554 A (MITSUI CHEMICALS, INC.) 25.05.2006 (2006-05-25) claims, examples | 1-8 |

Form PCT/ISA/210 (continuation of second sheet) (January 2015)

INTERNATIONAL SEARCH REPORT
Information on patent family members

International application No.

PCT/JP2020/014088

| Patent Documents referred in the Report | Publication Date | Patent Family | Publication Date |
|---|---|---|---|
| WO 2016/031975 A1 | 03 Mar. 2016 | US 2019/0010273 A1<br>claims, paragraphs<br>[0041]-[0057],<br>[0090]-[0094],<br>examples<br>EP 3196220 A1<br>CN 107075064 A | |
| JP 2001-330701 A | 30 Nov. 2001 | US 2001/0030734 A1<br>claims, paragraphs<br>[0049]-[0052],<br>examples<br>EP 1134242 A2<br>KR 10-2001-0092329 A<br>CN 1313513 A | |
| JP 2018-016778 A | 01 Feb. 2018 | US 2018/0273673 A1<br>claims, examples<br>EP 3492501 A1<br>KR 10-2018-0082480 A<br>CN 108473643 A | |
| WO 2016/153061 A1 | 29 Sep. 2016 | US 2018/0100033 A1<br>claims, examples<br>EP 3275911 A1<br>KR 10-2017-0122784 A<br>CN 107428898 A | |
| JP 2008-143872 A | 26 Jun. 2008 | (Family: none) | |
| JP 2004-059901 A | 26 Feb. 2004 | US 2003/0225202 A1<br>claims, examples<br>EP 1369709 A2<br>CN 1467510 A<br>KR 10-0566035 B1 | |
| JP 2006-131554 A | 25 May 2006 | (Family: none) | |

Form PCT/ISA/210 (patent family annex) (January 2015)

**EP 3 950 757 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7252207 B